# EUROPEAN PATENT SPECIFICATION

(11) **EP 3 556 239 B1**
(45) Date of publication and mention of the grant of the patent: **12.01.2022**
(21) Application number: 18893341.0
(22) Date of filing: 11.05.2018
(51) Int. Cl.: A43C 11/16

(54) **STRAP ADJUSTMENT APPARATUS AND ASSEMBLY**
RIEMENEINSTELLGERÄT UND ANORDNUNG
APPAREIL DE RÉGLAGE DE SANGLE ET ASSEMBLAGE DE L'APPAREIL

(30) Priority: 09.03.2018 CN 201810198928
(43) Date of publication of application: 23.10.2019
(73) Proprietor: Shenzhen Fitgo Technology Co., Ltd., ShenZhen, Guangdong 518000 (CN)
(72) Inventor: HU, Kaiyan, ShenZhen, Guangdong 518000 (CN)
(74) Representative: Novagraaf Technologies
(86) International application number: PCT/CN2018/086445
(87) International publication number: WO 2019/169732

(56) References cited:
- WO-A1-2016/099070
- CN-A- 108 354 269
- CN-U- 204 580 101
- CN-U- 204 812 386
- CN-U- 204 969 764
- CN-U- 207 023 427
- JP-A- 2017 184 964
- US-A1- 2015 014 463
- US-A1- 2015 313 319

## Description

### Technical Field

The present disclosure relates to the technical field of daily supplies, in particular to a strap adjustment apparatus and a strap adjustment assembly, comprising a strap, multiple bucking buckles and a adjustment apparatus.

### Background Art

Currently, fixing with a strap is a common fixing manner used for shoes, medical gears or other articles for daily use. A user loosens or tightens a strap to adjust the level of tightness.

In the prior art, the user holds two ends of the strap with two hands respectively to adjust the tightness, and knots and fixes the two ends of the strap after the adjustment is completed.

However, for the users, especially beginners or users having difficulty in using two hands, when fixing through the strap, operations of tying and tightness adjustment are relatively complex, and time-consuming.

Document US2015/014463A1 illustrates designs according to the prior art in which a device for tightening an article includes a housing, a spool rotatably positioned within the housing, a knob operably coupled with the spool to cause the spool to rotate within the housing, and a stop mechanism. The device is configured so that incremental rotation of the knob in a first direction causes a corresponding incremental rotation of the spool within the housing that incrementally tensions a tension member and thereby tightens the article.

Document US2015/313319A1 illustrates designs according to the prior art in which a wire clamping device is provided. It has a simple configuration and is operated in a simple maimer so as to improve convenience of use and product productivity and durability.

### Summary

An object of the present disclosure is to provide a strap adjustment apparatus and assembly, so as to solve the technical problems existing in the prior art that, for users, especially beginners or users having difficulty in using two hands, when fixing through a strap, operations of tying and tightness adjustment are relatively complex, and time-consuming.

The strap adjustment apparatus according to the invention is defined at claim 1. Preferred embodiments of the invention are disclosed in the dependent claims.

The strap adjustment apparatus provided in the present disclosure includes a driving part, a coiling part, and an adjusting part; the driving part, the coiling part, and the adjusting part are coaxially provided; the driving part and the coiling part are both movably connected with the adjusting part; the driving part is configured to drive the coiling part to rotate in an axial direction; the coiling part is provided thereon with a coiling column and spring sheets, and the coiling column is provided thereon with a fixing portion configured to fix a strap; the adjusting part is provided thereon with annular racks cooperating with the spring sheets.

Further, the adjusting part is in a ring shape; the adjusting part is sleeved outside the coiling part, and the annular racks are provided on an inner wall of the adjusting part; the adjusting part is provided thereon with eyelet holes configured for allowing the strap to pass through.

Further, the coiling part includes a coiling wheel and a clamping part; the coiling wheel and the clamping part are fixedly connected in a detachable manner; the clamping part is provided thereon with the spring sheets; the coiling wheel is provided thereon with the coiling column; the coiling wheel is provided thereon with a through hole configured for allowing the strap to pass through.

Further, the clamping part is an Ω-type spring sheet; two positioning columns are correspondingly provided at two sides of an opening of the Ω-type spring sheet, and the spring sheets are provided at extending parts of two ends of the opening of the Ω-type spring sheet; a positioning boss is provided on the coiling wheel, and two positioning grooves are correspondingly provided at two sides of the positioning boss; the two positioning columns are embedded in the two positioning grooves respectively.

Further, two fixing blocks and two arc-shaped bumps are provided on the driving part; the two fixing blocks respectively abut against lower ends of the spring sheets, and the two arc-shaped bumps respectively abut against an annular inner wall of the Ω-type spring sheet; a gap is provided between the two arc-shaped bumps, the coiling wheel is provided thereon with a driving bump, and the driving bump is embedded in the gap.

Further, the clamping part is a four-claw ratchet; the four-claw ratchet is in a ring shape; the four-claw ratchet is provided with multiple positioning notches on an inner wall, and multiple first driving notches and multiple spring sheets on an outer wall; the coiling wheel is provided thereon with multiple first driving blocks corresponding to the first driving notches and multiple positioning blocks cooperating with the positioning notches.

Further, the driving part is provided thereon with multiple second driving blocks; the four-claw ratchet is provided thereon with multiple second driving notches cooperating with the second driving blocks.

Further, the strap adjustment apparatus further includes a fixing part; the adjusting part is provided on the fixing part, and the fixing part is configured to be fixedly connected with an object outside.

Further, the fixing part includes a connector and a supporting base; the adjusting part, the connector, and the supporting base are provided in sequence; the supporting base and the connector are both fixedly connected with the adjusting part in a detachable manner.

Further, the present disclosure further provides a strap adjustment assembly according to claim 5, wherein the strap adjustment assembly includes a strap, multiple guiding buckles, and a strap adjustment apparatus, wherein the multiple guiding buckles are configured to be fixed on an object outside, and the multiple guiding buckles are provided at intervals; the strap passes through the multiple guiding buckles in sequence and is fixed on the fixing portion.

The strap adjustment apparatus provided in the present disclosure includes the driving part, the coiling part, and the adjusting part. In a use process, the fixing portion on the coiling column fixes the strap, and when a user needs to tighten the strap, the user rotates the driving part to enable the driving part to drive the coiling part to rotate in an axial direction, meanwhile, the spring sheets on the coiling part are deformed and perform engagement movement with the annular racks on the adjusting part. In the rotating process, the strap is gradually wound on the coiling column, so as to reduce length of the strap outside the apparatus, thereby increasing the level of tightness of the strap. When the user needs to loosen the strap, the user rotates the driving part in a reverse direction to enable the driving part to drive the coiling part to rotate in a reverse direction of the axial direction, meanwhile, the spring sheets on the coiling part are deformed and perform engagement movement with the annular racks on the adjusting part. In the rotating process, the strap is gradually unwound from the coiling column, so as to increase length of the strap outside the apparatus, thereby decreasing the level of tightness of the strap. The configuration of the spring sheets and the annular racks can enable the coiling part and the adjusting part to be relatively fixed after the user adjusts the strap to a preset level of tightness, and no engagement movement will be generated continuously.

As can be seen from the above, when fixing through the strap, with the above strap adjustment apparatus, the user can avoid the tying operation, and can complete the adjustment of the tightness level merely by rotating and operating the driving part with one hand, which operation is simple, and saves time, especially facilitating use of beginners or users having difficulty in using two hands.

As to the strap adjustment assembly provided in the present disclosure, the strap adjustment assembly includes the strap, multiple guiding buckles, and the strap adjustment apparatus, and the effects achieved by the strap adjustment assembly, the same as those of the strap adjustment apparatus, will not be described redundantly. Besides, the configuration of the multiple guiding buckles can enable an object outside to be tied by the strap more tightly.

### Brief Description of Drawings

In order to more clearly illustrate technical solutions in specific embodiments of the present disclosure or the prior art, accompanying drawings which need to be used for description of the specific embodiments or the prior art will be introduced briefly below. Apparently, the accompanying drawings in the description below merely show some embodiments of the present disclosure, and those ordinarily skilled in the art still could obtain other accompanying drawings in light of these accompanying drawings, without inventive effort.
FIG. 1 is a structural schematic diagram of a strap adjustment apparatus provided in an embodiment of the present disclosure;
FIG. 2 is a structural exploded diagram of the strap adjustment apparatus provided in an embodiment of the present disclosure;
FIG. 3 is a structural schematic diagram of a coiling part provided in an embodiment of the present disclosure;
FIG. 4 is a structural schematic diagram of an adjusting part provided in an embodiment of the present disclosure;
FIG. 5 is a structural schematic diagram of a coiling wheel provided in an embodiment of the present disclosure;
FIG. 6 is a structural schematic diagram of an Ω-type spring sheet provided in an embodiment of the present disclosure;
FIG. 7 is a structural schematic diagram of a driving part provided in an embodiment of the present disclosure;
FIG. 8 is a structural schematic diagram showing cooperation between the driving part and the Ω-type spring sheet provided in an embodiment of the present disclosure;
FIG. 9 is a structural schematic diagram of a four-claw ratchet provided in an embodiment of the present disclosure that does not fall under the scope of the claimed invention;
FIG. 10 is a structural schematic diagram of the driving part provided in another embodiment of the present disclosure that does not fall under the scope of the claimed invention;
FIG. 11 is a structural schematic diagram of the coiling wheel provided in another embodiment of the present disclosure that does not fall under the scope of the claimed invention;
FIG. 12 is a structural schematic diagram showing cooperation between the driving part and the four-claw ratchet provided in another embodiment of the present disclosure that does not fall under the scope of the claimed invention;
FIG. 13 is a structural schematic diagram showing cooperation between the coiling wheel and the four-claw ratchet provided in another embodiment of the present disclosure that does not fall under the scope of the claimed invention;
FIG. 14 is a structural schematic diagram of the strap adjustment apparatus provided in another embodiment of the present disclosure that does not fall under the scope of the claimed invention;
FIG. 15 is a structural exploded diagram of the strap adjustment apparatus provided in another embodiment of the present disclosure that does not fall under the scope of the claimed invention;
FIG. 16 is a structural schematic diagram showing cooperation between the fixing part and the adjusting part provided in an embodiment of the present disclosure that does not fall under the scope of the claimed invention;
FIG. 17 is a structural schematic diagram of a connector provided in an embodiment of the present disclosure;
FIG. 18 is a structural schematic diagram of a supporting base provided in an embodiment of the present disclosure;
FIG. 19 is a structural schematic diagram showing cooperation between the strap adjustment assembly and a shoe provided in an embodiment of the present disclosure;
FIG. 20 is a structural schematic diagram showing cooperation between the strap adjustment assembly and a medical legging provided in an embodiment of the present disclosure;
FIG. 21 is a structural schematic diagram of the strap adjustment assembly provided in an embodiment of the present disclosure;
FIG. 22 is a structural schematic diagram of the strap adjustment assembly provided in another embodiment of the present disclosure;
FIG. 23 is a structural schematic diagram showing cooperation between the strap, and the coiling wheel, the adjusting part, and the guiding buckles provided in an embodiment of the present disclosure; and
FIG. 24 is a structural schematic diagram showing cooperation between the strap, and the coiling wheel, the adjusting part, and the guiding buckles provided in an embodiment of the present disclosure.

Reference signs: 1-driving part; 2-coiling part; 3-adjusting part; 4-coiling column; 5-spring sheet; 6-fixing portion; 7-annular rack; 8-eyelet hole; 9-through hole; 10-positioning column; 11-positioning boss; 12-positioning groove; 13-fixing block; 14-arc-shaped bump; 15-driving bump; 16-positioning notch; 17-first driving notch; 18-first driving block; 19-positioning block; 20-second driving block; 21-second driving notch; 22-fixing part; 23-guiding buckle; 24-strap; 25-friction portion; 26-annular rim; 27-central positioning hole; 28-central positioning shaft; 29-fixing strip; 30-fixing notch; 31-fixing bolt; 32-counterbore; 33-connection hole; 34-fixing column; 35-threaded hole; 36-fixing slot; 37-fixing buckle; 38-fixing groove; 39-fixing protrusion; 40-shoe; 41-medical legging; 42-strap adjustment apparatus; 43-fixing boss; 210-coiling wheel; 220-clamping part; 221-Q-type spring sheet; 222-four-claw ratchet; 2210-connector; 2220-supporting base.

### Detailed Description of Embodiments

In the description of the present disclosure, it should be indicated that orientational or positional relations indicated by terms "center", "upper", "lower", "left", "right", "vertical", "horizontal", "inner", "outer" and so on, if appear, are based on orientational or positional relations as shown in the accompanying drawings, merely for facilitating the description of the present disclosure and simplifying the description, rather than indicating or implying that related apparatuses or elements have to be in the specific orientation or configured and operated in a specific orientation, therefore, they should not be construed as limitation on the present disclosure. Besides, terms "first", "second", or "third", if appear, are merely for descriptive purpose, but should not be construed as indicating or implying relatively importance.

In the description of the present disclosure, it should be indicated that unless otherwise specified and defined explicitly, terms "mount", "link", or "connect" should be construed in a broad sense. For example, it may be fixed connection, detachable connection, or integral connection; it may be mechanical connection, and also may be electrical connection; it may be direct linking, indirect linking via an intermediate medium, or inner communication between two elements. For those ordinarily skilled in the art, specific meanings of the above-mentioned terms in the present disclosure can be understood according to specific circumstances.

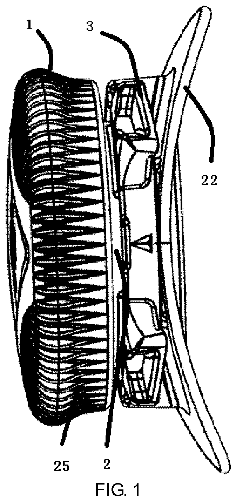

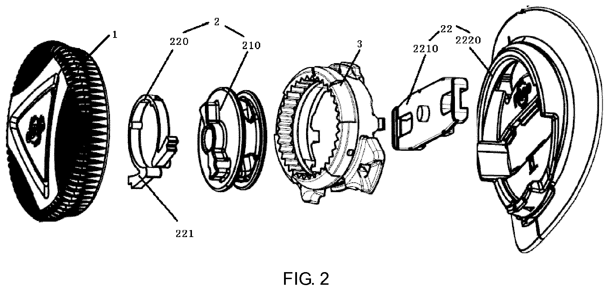

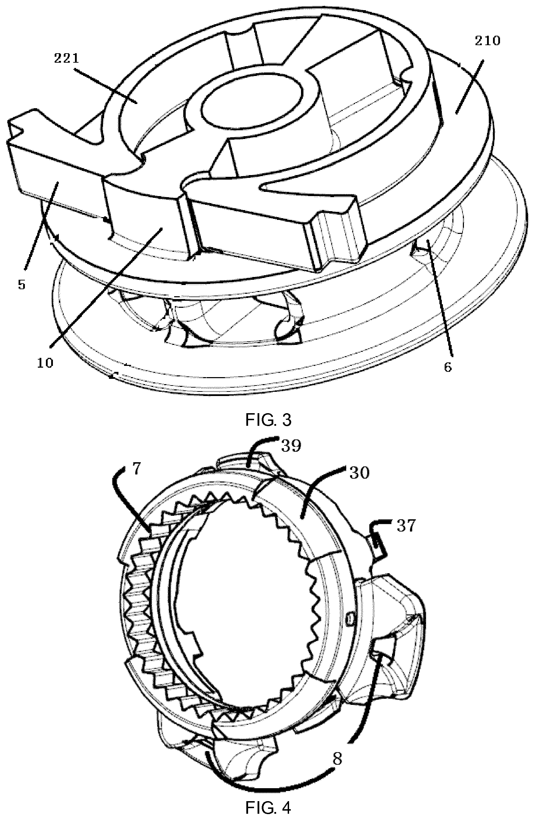

FIG. 1 is a structural schematic diagram of a strap adjustment apparatus provided in an embodiment of the present disclosure; FIG. 2 is a structural exploded diagram of the strap adjustment apparatus provided in an embodiment of the present disclosure; FIG. 3 is a structural schematic diagram of a coiling part provided in an embodiment of the present disclosure; and FIG. 4 is a structural schematic diagram of an adjusting part provided in an embodiment of the present disclosure. As shown in FIG. 1, FIG. 2, FIG. 3, and FIG. 4, a strap adjustment apparatus 42 provided in the present embodiment includes a driving part 1, a coiling part 2, and an adjusting part 3, wherein the driving part 1, the coiling part 2, and the adjusting part 3 are coaxially provided; the driving part 1 and the coiling part 2 are both movably connected with the adjusting part 3; the driving part 1 is configured to drive the coiling part 2 to rotate in an axial direction; the coiling part 2 is provided thereon with a coiling column 4 and spring sheets 5, and the coiling column 4 is provided thereon with a fixing portion 6 configured to fix a strap 24; the adjusting part 3 is provided thereon with annular racks 7 cooperating with the spring sheets 5.

The strap adjustment apparatus 42 provided in the present embodiment includes the driving part 1, the coiling part 2, and the adjusting part 3. In a use process, the fixing portion 6 on the coiling column 4 fixes the strap 24, and when a user needs to tighten the strap 24, the user rotates the driving part 1 to enable the driving part 1 to drive the coiling part 2 to rotate in the axial direction, meanwhile, the spring sheets 5 on the coiling part 2 are deformed and perform engagement movement with the annular racks 7 on the adjusting part 3. In the rotating process, the strap 24 is gradually wound on the coiling column 4, so as to reduce length of the strap 24 outside the apparatus, thereby increasing the level of tightness of the strap 24. When the user needs to loosen the strap 24, the user rotates the driving part 1 in a reverse direction to enable the driving part 1 to drive the coiling part 2 to rotate in a reverse direction of the axial direction, meanwhile, the spring sheets 5 on the coiling part 2 are deformed and perform engagement movement with the annular racks 7 on the adjusting part 3. In the rotating process, the strap 24 is gradually unwound from the coiling column 4, so as to increase length of the strap 24 outside the apparatus, thereby decreasing the level of tightness of the strap 24. The configuration of the spring sheets 5 and the annular racks 7 can enable the coiling part 2 and the adjusting part 3 to be relatively fixed after the user adjusts the strap to a preset level of tightness, and no engagement movement will be generated continuously.

As can be seen from the above, when fixing through the strap 24, with the above strap adjustment apparatus 42, the user can avoid the tying operation, and can complete the adjustment of the tightness level merely by rotating and operating the driving part 1 with one hand, which operation is simple, and saves time, especially facilitating use of beginners or users having difficulty in using two hands.

As shown in FIG. 1 and FIG. 4, on the basis of the above embodiment, further, the adjusting part 3 is in a ring shape; the adjusting part 3 is sleeved outside the coiling part 2, and the annular racks 7 are provided on an inner wall of the adjusting part 3; the adjusting part 3 is provided thereon with eyelet holes 8 configured for the strap 24 to pass through.

In the above, the driving part 1 may be a cover, which is covered outside the coiling part 2 and the adjusting part 3, and the cover is fixedly connected with the coiling part 2, so as to drive the coiling part 2 to synchronously rotate therewith in an axial direction. The covering configuration can allow the cover to serve a function of protecting the coiling part 2 and the adjusting part 3.

Further, a friction portion 25 is provided on an outer wall of the cover, and when adjusting the driving part 1, the user puts his/her fingers on the friction portion 25, and then moves the driving part 1. The configuration of the friction portion 25 can increase a friction force between the fingers and the driving part 1, to make the user's adjustment more convenient.

Further, the strap adjustment apparatus 42 may be provided thereon with a connection shaft, and the driving part 1, the coiling part 2, and the adjusting part 3 are sleeved on the connection shaft in sequence, so as to ensure more stable coaxial configuration of the three.

Further, the driving part 1 and the coiling part 2 may be in bolted connection or bonded connected.

Further, the fixing portion 6 may be a fixing clip, with which the user fixes the strap 24 on the coiling column 4, and when the user rotates the coiling part 2, the strap 24 is wound on the coiling column 4.

Further, the adjusting part 3 is in an annular shape, the annular racks 7 can be provided on an outer wall of the adjusting part 3, and the spring sheets 5 are engaged with the annular racks 7. When the user rotates the driving part 1 and the coiling part 2, the spring sheets 5 perform annular engagement movement in an extending direction of the racks.

Further, due to the configuration of the spring sheets 5 and the annular racks 7, in a moving process of an object fixed by the strap 24, the spring sheets 5 and the racks will not generate relative movement with changes of a pulling force of the strap 24, and only when the driving part 1 is rotated, can the two generate relative movement.

Further, the annular racks 7 may have the same tooth shape as the ratchet, and after the tightness of the strap 24 is adjusted, the annular racks cannot rotate reversely due to the characteristic of engagement movement of the ratchet that it only can rotate towards one direction. The configuration of such tooth shape can make the apparatus more stable, and maintain the preset level of tightness.

In the present embodiment, the configuration of sleeving the adjusting part 3 not only can save an occupation space of the apparatus, but also can serve a function of positionally limiting the coiling part 2, such that the apparatus is more stable. The configuration of the eyelet holes 8 can facilitate the strap 24 passing through the adjusting part 3 and fixedly connecting with the coiling column 4 using the fixing portion 6.

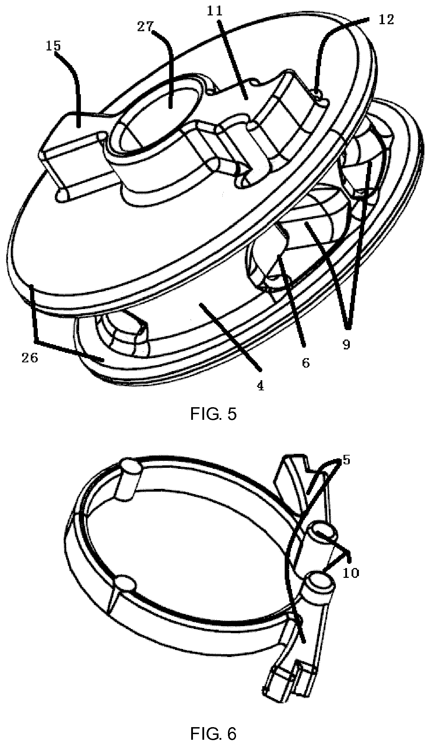

FIG. 5 is a structural schematic diagram of a coiling wheel provided in an embodiment of the present disclosure. As shown in FIG. 2 and FIG. 5, on the basis of the above embodiments, further, the coiling part 2 includes a coiling wheel 210 and a clamping part 220, wherein the coiling wheel 210 and the clamping part 220 are fixedly connected in a detachable manner; the clamping part 220 is provided thereon with the spring sheets 5; the coiling wheel 210 is provided thereon with the coiling column 4; the coiling wheel 210 is provided thereon with a through hole 9 configured for the strap 24 to pass through.

In the above, two ends of the coiling column 4 are each provided with an annular rim 26, and when the strap 24 is wound on the coiling column 4, the annular rim 26 can function to positionally limit the strap 24, and prevent the strap 24 from escaping from the two ends of the coiling column 4.

Further, two through holes 9 may be provided, and two ends of the strap 24 are put through the two through holes 9, respectively, and tied respectively, preventing the two ends from escaping from the through holes 9; alternatively, the two ends of the strap 24 are tied together after being put through the two through holes 9, respectively.

Further, one through hole 9 may be provided, and two ends of the strap 24 are both put through the through hole 9, and tied together, preventing the two ends from escaping from the through hole 9.

In the present embodiment, the detachable configuration manner can facilitate the users in detaching, installing or changing structural components, and the configuration of the through hole 9 can make the users more conveniently assemble the strap 24, rendering stable connection and a lower cost.

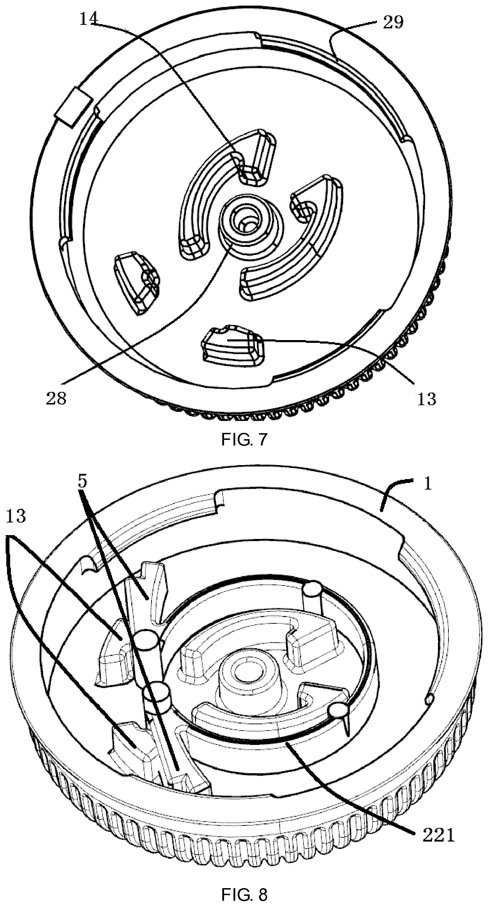

FIG. 6 is a structural schematic diagram of an Ω-type spring sheet provided in an embodiment of the present disclosure; FIG. 7 is a structural schematic diagram of the driving part provided in an embodiment of the present disclosure; and FIG. 8 is a structural schematic diagram showing cooperation between the driving part and the Ω-type spring sheet provided in an embodiment of the present disclosure. As shown in FIG. 3, FIG. 6, FIG. 7, and FIG. 8, based on the above embodiments, further, the clamping part 220 is an Ω-type spring sheet 221; two positioning columns 10 are correspondingly provided at two sides of an opening of the Ω-type spring sheet 221, and the spring sheets 5 are provided at extending parts of the two ends of the opening of the Ω-type spring sheet 221; a positioning boss 11 is provided on the coiling wheel 210, and two positioning grooves 12 are correspondingly provided at two sides of the positioning boss 11; the two positioning columns 10 are embedded in the two positioning grooves 12 respectively. Two fixing blocks 13 and two arc-shaped bumps 14 are provided on the driving part 1; the two fixing blocks 13 respectively abut against lower ends of the spring sheets 5, and the two arc-shaped bumps 14 respectively abut against an annular inner wall of the Ω-type spring sheet 221; a gap is provided between the two arc-shaped bumps 14, the coiling wheel 210 is provided thereon with a driving bump 15, and the driving bump 15 is embedded in the gap.

In the above, the two positioning grooves 12 are provided facing back to each other.

Further, the coiling wheel 210 is provided with a central positioning hole 27 in a central position, and the driving part 1 is provided in a central portion with a central positioning shaft 28 cooperating with the central hole. In a use process, the central positioning shaft 28 is inserted in the central positioning hole 27, so as to ensure more stable coaxial movement of the two, and also serve a positioning function in an assembling process.

Further, the driving part 1 is provided thereon with a fixing strip 29, and the adjusting part 3 is provided thereon with a fixing notch 30 cooperating with the fixing strip 29. In an installation process, the user clamps the fixing strip 29 in the fixing notch 30, so as to allow the driving part 1 to be connected with the adjusting part 3; in a use process, the fixing strip 29 is moved along the fixing notch 30, so as to generate relative rotation between the driving part 1 and the adjusting part 3.

In the present embodiment, in a use process, since the driving bump 15 is embedded in the gap between the two arc-shaped bumps 14, and the two positioning columns 10 are embedded in the two positioning grooves 12, when the user rotates the driving part 1, the arc-shaped bumps 14 on the driving part 1 drive the driving bump 15 on the coiling wheel 210 to rotate, and the positioning boss 11 on the coiling wheel 210 drives the positioning columns 10 to rotate, so as to drive the Ω-type spring sheet 221 to rotate, allowing the two spring sheets 5 on the Ω-type spring sheet 221 to be engaged with the annular racks 7 on the adjusting part 3, and achieving synchronous rotation of the driving part 1, the Ω-type spring sheet 221, and the coiling wheel 210. The configuration of the two fixing blocks 13 and the two arc-shaped bumps 14 can prevent the Ω-type spring sheet 221 from being deformed excessively in a use process, prolonging the service life thereof.

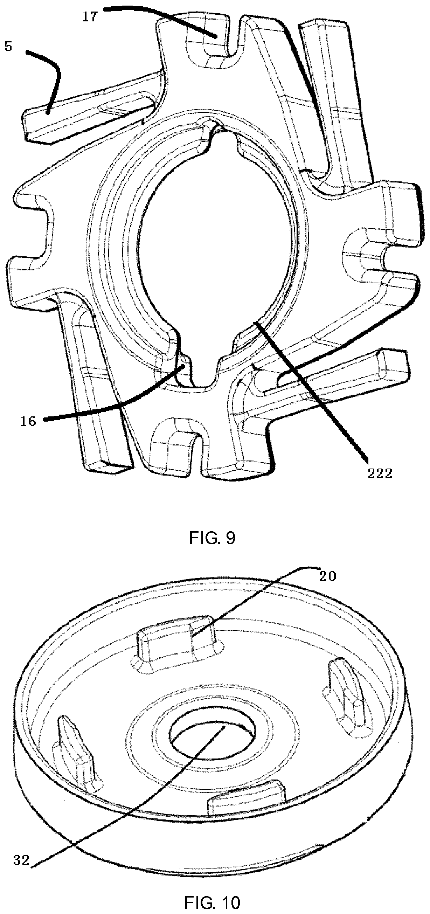

The hereunder embodiments illustrated in FIG. 9 to 16 are not according to the invention and are present for illustration purposes only.

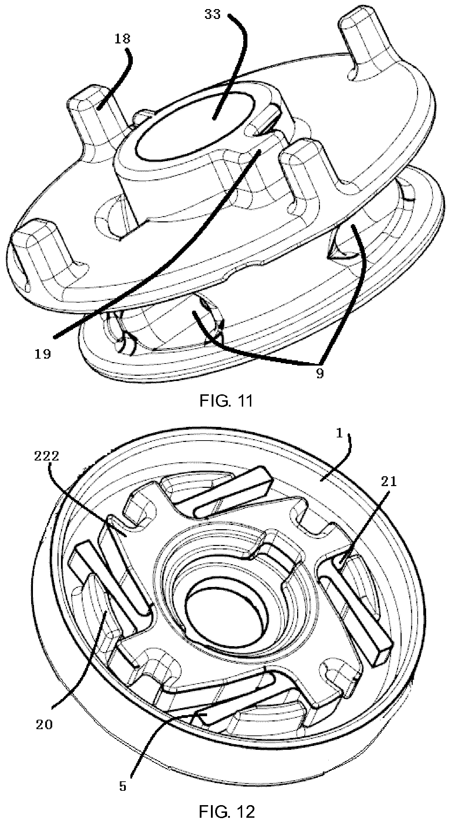

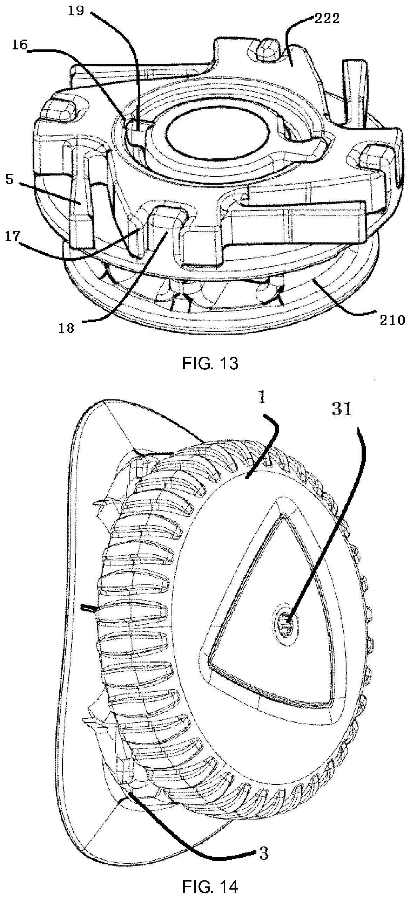

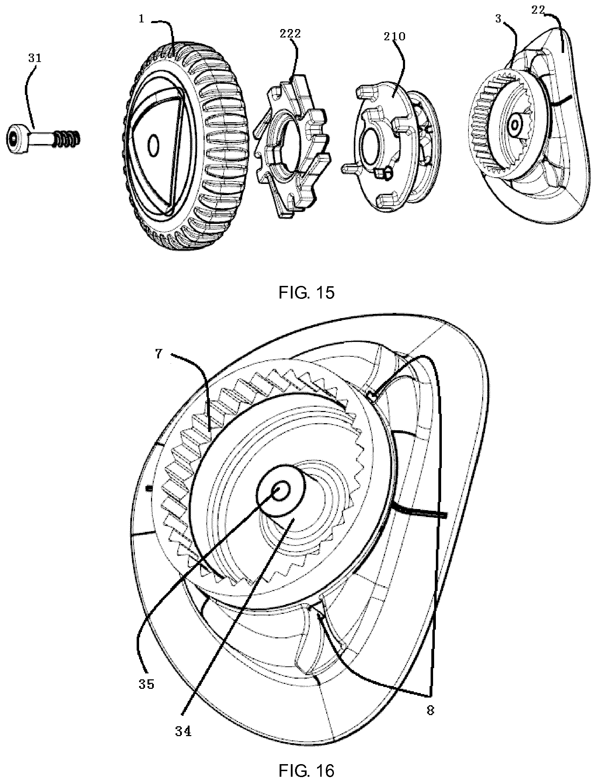

FIG. 9 is a structural schematic diagram of a four-claw ratchet provided in an embodiment of the present disclosure; FIG. 10 is a structural schematic diagram of the driving part provided in another embodiment of the present disclosure; FIG. 11 is a structural schematic diagram of the coiling wheel provided in another embodiment of the present disclosure; FIG. 12 is a structural schematic diagram showing cooperation between the driving part and the four-claw ratchet provided in another embodiment of the present disclosure; FIG. 13 is a structural schematic diagram showing cooperation between the coiling wheel and the four-claw ratchet provided in another embodiment of the present disclosure; FIG. 14 is a structural schematic diagram of the strap adjustment apparatus provided in another embodiment of the present disclosure; and FIG. 15 is a structural exploded schematic diagram of the strap adjustment apparatus provided in another embodiment of the present disclosure. As shown in FIG. 9 to FIG. 15, on the basis of the above embodiments, further, the clamping part 220 is a four-claw ratchet 222; the four-claw ratchet 222 is in a ring shape; the four-claw ratchet 222 is provided with multiple positioning notches 16 on an inner wall, and multiple first driving notches 17 and multiple spring sheets 5 on an outer wall; the coiling wheel 210 is provided thereon with multiple first driving blocks 18 corresponding to the first driving notches 17 and multiple positioning blocks 19 cooperating with the positioning notches 16. The driving part 1 is provided thereon with multiple second driving blocks 20; the four-claw ratchet 222 is provided thereon with multiple second driving notches 21 cooperating with the second driving blocks 20.

In the above, the multiple positioning notches 16 are provided at intervals in sequence, the multiple first driving notches 17 are provided at intervals in sequence, the multiple spring sheets 5 are provided at intervals in sequence, the multiple first driving blocks 18 are provided at intervals in sequence, the multiple positioning blocks 19 are provided at intervals in sequence, the multiple second driving blocks 20 are provided at intervals in sequence, and the multiple second driving notches 21 are provided at intervals in sequence. In this way, a more uniform force can be exerted on the apparatus, the in-use stability is improved, and the service life of the apparatus is prolonged.

Further, the strap adjustment apparatus 42 further includes a fixing bolt 31, and the driving part 1 is provided thereon with a counterbore 32; the coiling wheel 210 is provided thereon with a connection hole 33; the adjusting part 3 is provided thereon with a fixing column 34, and a threaded hole 35 is on the fixing column 34. In an assembling process, the fixing bolt 31 passes through the counterbore 32, an annular central portion of the four-claw ratchet 222, and the connection hole 33 in sequence, and finally is screwed up and cooperates with the threaded hole 35. In this way, the driving part 1, the four-claw ratchet 222, the coiling wheel 210, and the adjusting part 3 can be connected, and the driving part 1, the four-claw ratchet 222, and the coiling wheel 210 can rotate coaxially.

In the present embodiment, in a use process, as the second driving block 20 cooperates with the second driving notch 21, and the first driving block 18 cooperates with the first driving notch 17, when the user rotates the driving part 1, the second driving block 20 drives the four-claw ratchet 222 to rotate, and the four-claw ratchet 222 drives the coiling wheel 210 to rotate, meanwhile, the spring sheets 5 on an outer wall of the four-claw ratchet 222 are engaged with the annular racks 7 on the adjusting part 3, and thus the driving part 1, the four-claw ratchet 222, and the coiling wheel 210 achieve synchronous rotation. In an assembling process, the configuration of the positioning notches 16 and the positioning blocks 19 can ensure precise assembling of the coiling wheel 210 and the four-claw ratchet 222, saving assembling time.

FIG. 15 is a structural exploded schematic diagram of the strap adjustment apparatus provided in another embodiment of the present disclosure. As shown in FIG. 15 and FIG. 16, on the basis of the above embodiments, further, the strap adjustment apparatus 42 further includes a fixing part 22; the adjusting part 3 is provided on the fixing part 22, and the fixing part 22 is configured to be fixedly connected with an object outside.

In the above, the adjusting part 3 and the fixing part 22 may be molded in one piece.

Further, the fixing part 22 may be fixed on an object outside by stitching.

In the present embodiment, in an installation process, the fixing part 22 is fixedly connected with an object outside, and since the adjusting part 3 is provided on the fixing part 22, the adjusting part 3 is connected with the object outside, thereby allowing more stable configuration of the driving part 1, the coiling part 2, and the adjusting part 3.

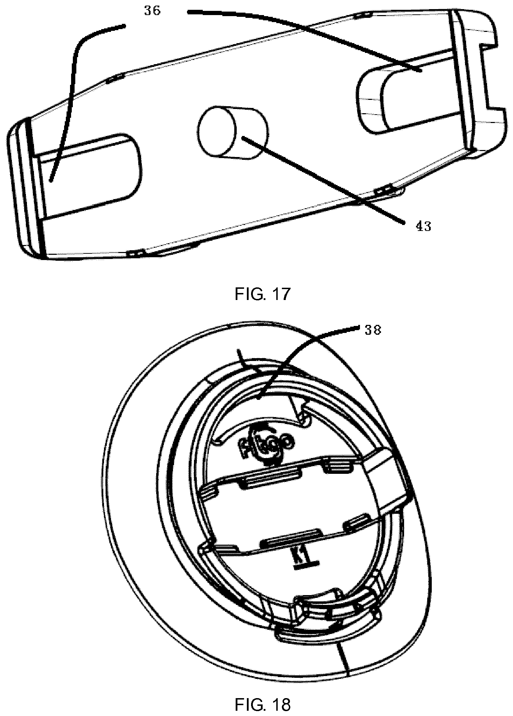

FIG. 17 is a structural schematic diagram of a connector provided in an embodiment of the present disclosure; FIG. 18 is a structural schematic diagram of a supporting base provided in an embodiment of the present disclosure. As shown in FIG. 2, FIG. 4, FIG. 17, and FIG. 18, on the basis of the above embodiments, further, the fixing part 22 includes a connector 2210 and a supporting base 2220; the adjusting part 3, the connector 2210, and the supporting base 2220 are provided in sequence; the supporting base 2220 and the connector 2210 are both fixedly connected with the adjusting part 3 in a detachable manner.

In the above, the connector 2210 is provided thereon with multiple fixing slots 36, and the adjusting part 3 is provided thereon with multiple fixing buckles 37 cooperating with the multiple fixing slots 36. In a use process, the fixing buckles 37 are clamped in the fixing slots 36, so as to positionally limit the coiling wheel 210, ensuring the coiling wheel 210 to be located inside an annular shape of the adjusting part 3 all the time, and allowing the apparatus to be more stable in use.

Further, the connector 2210 is provided thereon with a fixing boss 43, and the fixing boss 43 passes through the central positioning hole 27.

Further, the supporting base 2220 is provided thereon with a fixing groove 38, and the adjusting part 3 is provided thereon with a fixing protrusion 39 cooperating with the fixing groove 38. In a use process, the fixing protrusion 39 is clamped in the fixing groove 38, so as to allow the supporting base 2220 to be fixedly connected with the adjusting part 3.

In the present embodiment, the fixing part 22 includes the connector 2210 and the supporting base 2220. In a use process, the connector 2210 is configured to positionally limit the coiling wheel 210, and the supporting base 2220 is configured to be fixedly connected with an object outside, so as to allow the driving part 1, the coiling part 2, and the adjusting part 3 to be connected with the object outside. The detachable connection manner can facilitate the users in detaching, installing or changing the parts, and facilitate the users in assembling the strap 24.

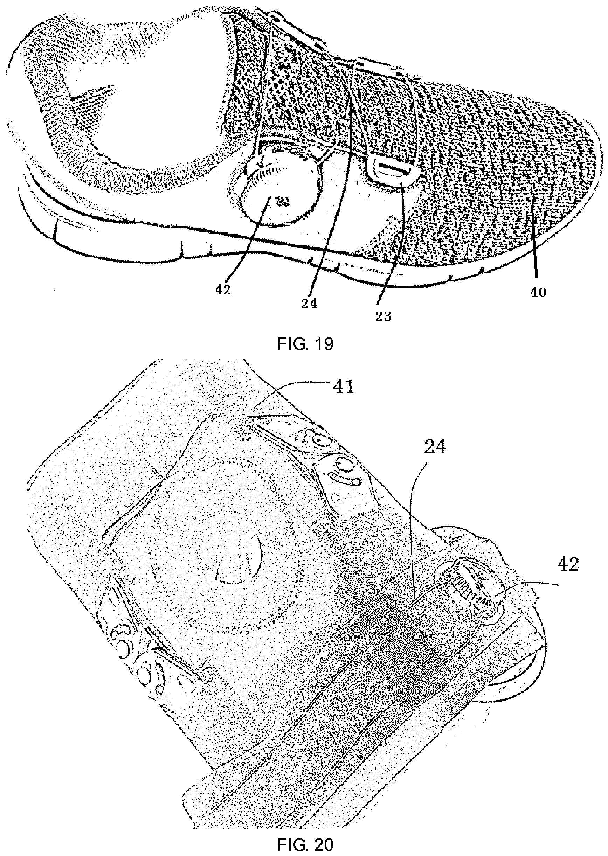

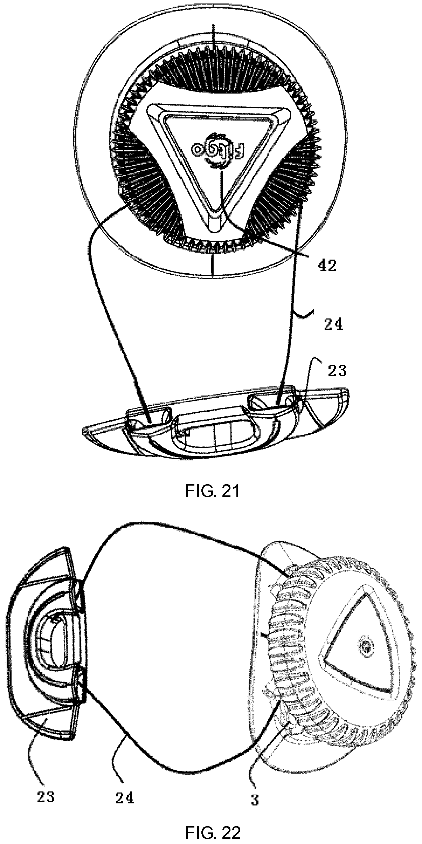

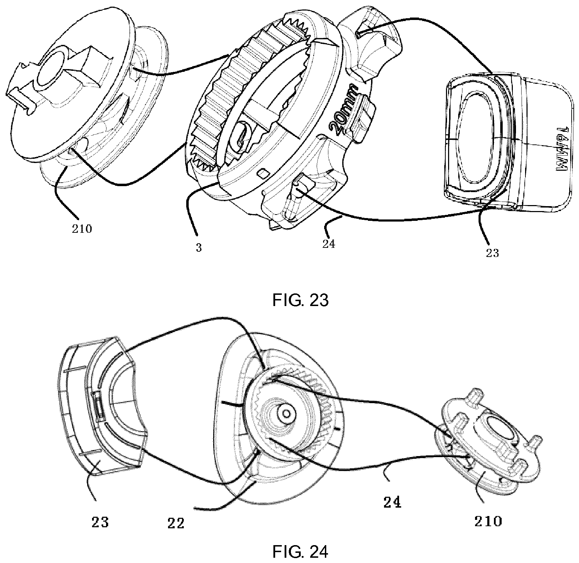

FIG. 19 is a structural schematic diagram showing cooperation between the strap adjustment assembly and a shoe provided in an embodiment of the present disclosure; FIG. 20 is a structural schematic diagram showing cooperation between the strap adjustment assembly and a medical legging provided in an embodiment of the present disclosure; FIG. 21 is a structural schematic diagram of the strap adjustment assembly provided in an embodiment of the present disclosure; FIG. 22 is a structural schematic diagram of the strap adjustment assembly provided in another embodiment of the present disclosure; FIG. 23 is a structural schematic diagram showing cooperation between the strap, and the coiling wheel, the adjusting part, and the guiding buckles provided in an embodiment of the present disclosure; and FIG. 24 is a structural schematic diagram showing cooperation between the strap, and the coiling wheel, the adjusting part, and the guiding buckles provided in an embodiment of the present disclosure. As shown in FIG. 19 to FIG. 24, on the basis of the above embodiments, further, an embodiment of the present disclosure further provides a strap adjustment assembly, wherein the strap adjustment assembly includes the strap 24, multiple guiding buckles 23, and the strap adjustment apparatus 42, wherein the multiple guiding buckles 23 are configured to be fixed on an object outside, and the multiple guiding buckles 23 are provided at intervals; the strap 24 passes through the multiple guiding buckles 23 in sequence and is fixed on the fixing portion 6.

In the above, when the object outside is a shoe 40, the strap 24 passes through the multiple guiding buckles 23 in sequence, and is fixed on the fixing portion 6. When the object outside is a medical legging 41, the strap 24 may be wound on an outer wall of the medical legging 41 in a process of being put through the multiple guiding buckles 23, so as to bind the medical legging 41, and allow the medical legging 41 to be more stably fixed, thereby ensuring therapeutic effect.

Further, the configuration manner of the multiple guiding buckles 23 should be based on a range of tightness of the object outside that needs to be adjusted in an actual situation.

In the present embodiment, the strap adjustment assembly includes the strap 24, the multiple guiding buckles 23, and the strap adjustment apparatus 42, and the effects achieved by the strap adjustment assembly, the same as the effects of the strap adjustment apparatus 42, will not be described redundantly. Besides, configuration of the multiple guiding buckles 23 can allow the object outside to be tied by the strap 24 more tightly.

## Claims

1. A strap adjustment apparatus (42), comprising: a driving part (1), a coiling part (2), and an adjusting part (3), wherein
the driving part (1), the coiling part (2), and the adjusting part (3) are coaxially provided; the driving part (1) and the coiling part (2) are both movably connected with the adjusting part (3); the driving part (1) is configured to drive the coiling part (2) to rotate in an axial direction; the coiling part (2) is provided thereon with a coiling column (4) and spring sheets (5), and the coiling column (4) is provided thereon with a fixing portion (6) configured to fix a strap (24); the adjusting part (3) is provided thereon with annular racks (7) cooperating with the spring sheets (5); the adjusting part (3) is in a ring shape; the adjusting part (3) is sleeved outside the coiling part (2), and the annular racks (7) are provided on an inner wall of the adjusting part (3); the adjusting part (3) is provided thereon with eyelet holes (8) configured for allowing the strap (24) to pass through; the coiling part (2) comprises a coiling wheel (210) and a clamping part (220); the coiling wheel (210) and the clamping part (220) are fixedly connected in a detachable manner; the clamping part (220) is provided thereon with the spring sheets (5); the coiling wheel (210) is provided thereon with the coiling column (4); and the coiling wheel (210) is provided thereon with a through hole (9) configured for allowing the strap (24) to pass through,
**characterized in that** the clamping part (220) is an Ω-type spring sheet (221), two positioning columns (10) are correspondingly provided at two sides of an opening of the Ω-type spring sheet (221), and the spring sheets (5) are provided at extending parts of two ends of the opening of the Ω-type spring sheet (221); a positioning boss (11) is provided on the coiling wheel (210), and two positioning grooves (12) are correspondingly provided at two sides of the positioning boss (11); and the two positioning columns (10) are embedded in the two positioning grooves (12) respectively.

2. The strap adjustment apparatus (42) according to claim 1, wherein two fixing blocks (13) and two arc-shaped bumps (14) are provided on the driving part (1);
the two fixing blocks (13) respectively abut against lower ends of the spring sheets (5), and the two arc-shaped bumps (14) respectively abut against an annular inner wall of the Ω-type spring sheet (221); and
a gap is provided between the two arc-shaped bumps (14), the coiling wheel (210) is provided thereon with a driving bump (15), and the driving bump (15) is embedded in the gap.

3. The strap adjustment apparatus (42) according to claim 1 or 2, further comprising a fixing part (22), wherein
the adjusting part (3) is provided on the fixing part (22), and the fixing part (22) is configured to be fixedly connected with an object outside.

4. The strap adjustment apparatus (42) according to claim 3, wherein the fixing part (22) comprises a connector (2210) and a supporting base (2220); and
the adjusting part (3), the connector (2210), and the supporting base (2220) are provided in sequence; the supporting base (2220) and the connector (2210) are both fixedly connected with the adjusting part (3) in a detachable manner.

5. A strap adjustment assembly, **characterized by** comprising a strap (24), multiple guiding buckles (23), and the strap adjustment apparatus (42) according to any one of claims 1-4, wherein
the multiple guiding buckles (23) are configured to be fixed on an object outside, and the multiple guiding buckles (23) are provided at intervals; and the strap (24) passes through the multiple guiding buckles (23) in sequence and is fixed on the fixing portion (6).

## Patentansprüche

1. Bandeinstellvorrichtung (42), umfassend: ein Antriebsteil (1), ein Aufrollteil (2) und ein Einstellteil (3), wobei
das Antriebsteil (1), das Wickelteil (2) und das Einstellteil (3) koaxial vorgesehen sind; das Antriebsteil (1) und das Wickelteil (2) beide beweglich mit dem Einstellteil (3) verbunden sind; das Antriebsteil (1) so konfiguriert ist, dass es das Wickelteil (2) so antreibt, dass es sich in einer axialen Richtung dreht; der Wickelteil (2) ist darauf mit einer Wickelsäule (4) und Federblechen (5) versehen, und die Wickelsäule (4) ist darauf mit einem Befestigungsabschnitt (6) versehen, der so konfiguriert ist, dass er ein Band (24) befestigt; der Verstellteil (3) ist darauf mit ringförmigen Zahnstangen (7) versehen, die mit den Federblechen (5) zusammenwirken; der Verstellteil (3) hat eine Ringform; das Verstellteil (3) ist außerhalb des Wickelteils (2) mit einer Hülse versehen, und die ringförmigen Zahnstangen (7) sind an einer Innenwand des Verstellteils (3) vorgesehen; das Verstellteil (3) ist an diesem mit Ösenlöchern (8) versehen, die so gestaltet sind, dass das Band (24) hindurchgeführt werden kann; das Wickelteil (2) umfasst ein Wickelrad (210) und ein Klemmteil (220); das Wickelrad (210) und das Klemmteil (220) lösbar fest verbunden sind; das Klemmteil (220) darauf mit den Federblechen (5) versehen ist; das Wickelrad (210) darauf mit der Wickelsäule (4) versehen ist; und das Wickelrad (210) darauf mit einem Durchgangsloch (9) versehen ist, das so gestaltet ist, dass das Band (24) hindurchtreten kann, **dadurch gekennzeichnet, dass** das Klemmteil (220) ein Ω-Typ-Federblatt (221) ist, zwei Positionierungssäulen (10) entsprechend an zwei Seiten einer Öffnung des Ω-Typ-Federblatts (221) vorgesehen sind und die Federblätter (5) an sich erstreckenden Teilen von zwei Enden der Öffnung des Ω-Typ-Federblatts (221) vorgesehen sind; ein Positionierungsvorsprung (11) ist auf dem Wickelrad (210) vorgesehen, und zwei Positionierungsnuten (12) sind entsprechend an zwei Seiten des Positionierungsvorsprungs (11) vorgesehen; und die zwei Positionierungssäulen (10) sind jeweils in die zwei Positionierungsnuten (12) eingebettet.

2. Die Bandeinstellvorrichtung (42) nach Anspruch 1, wobei zwei Befestigungsblöcke (13) und zwei bogenförmige Höcker (14) auf dem Antriebsteil (1) vorgesehen sind;
die beiden Befestigungsblöcke (13) jeweils an den unteren Enden der Federbleche (5) anliegen, und die beiden bogenförmigen Erhebungen (14) jeweils an einer ringförmigen Innenwand des Ω-Federblechs (221) anliegen; und
ein Spalt zwischen den beiden bogenförmigen Höckern (14) vorgesehen ist, das Wickelrad (210) darauf mit einem Antriebshöcker (15) versehen ist und der Antriebshöcker (15) in den Spalt eingebettet ist.

3. Bandeinstellvorrichtung (42) nach Anspruch 1 oder 2, ferner mit einem Befestigungsteil (22), wobei
das Verstellteil (3) an dem Befestigungsteil (22) vorgesehen ist und das Befestigungsteil (22) so konfiguriert ist, dass es fest mit einem Objekt außerhalb verbunden werden kann.

4. Bandeinstellvorrichtung (42) nach Anspruch 3, wobei das Befestigungsteil (22) einen Verbinder (2210) und eine Stützbasis (2220) umfasst; und
das Verstellteil (3), der Verbinder (2210) und die Stützbasis (2220) nacheinander vorgesehen sind; die Stützbasis (2220) und der Verbinder (2210) beide fest mit dem Verstellteil (3) in einer lösbaren Weise verbunden sind.

5. Bandeinstellvorrichtung, **dadurch gekennzeichnet, dass** sie einen Gurt (24), mehrere Führungsschnallen (23) und die Bandeinstellvorrichtung (42) nach einem der Ansprüche 1-4 umfasst, wobei die mehreren Führungsschnallen (23) so konfiguriert sind, dass sie an einem Objekt außerhalb befestigt werden können, und die mehreren Führungsschnallen (23) in Abständen vorgesehen sind; und der Gurt (24) nacheinander durch die mehreren Führungsschnallen (23) verläuft und an dem Befestigungsabschnitt (6) befestigt wird.

## Revendications

1. Appareil de réglage de sangle (42), comprenant : une partie d'entrainement (1), une partie d'enroulement (2), et une partie de réglage (3), dans lequel
la partie d'entrainement (1), la partie d'enroulement (2) et la partie de réglage (3) sont prévues de manière coaxiale ; la partie d'entrainement (1) et la partie d'enroulement (2) sont toutes deux reliées de manière mobile à la partie de réglage (3) ; la partie d'entrainement (1) est configurée pour entrainer la partie d'enroulement (2) à tourner dans une direction axiale ; la partie d'enroulement (2) est pourvue sur celle-ci d'une colonne d'enroulement (4) et de feuilles de ressort (5), et la colonne d'enroulement (4) est pourvue sur celle-ci d'une partie de fixation (6) configurée pour fixer une sangle (24) ; la partie de réglage (3) est pourvue sur celle-ci de crémaillères annulaires (7) coopérant avec les feuilles de ressort (5) ; la partie de réglage (3) est en forme d'anneau ; la partie d'ajustement (3) est manchonnée à l'extérieur de la partie d'enroulement (2), et les crémaillères annulaires (7) sont prévues sur une paroi intérieure de la partie d'ajustement (3) ; la partie d'ajustement (3) est pourvue sur celle-ci de trous d'œillet (8) configurés pour permettre le passage de la sangle (24) ; la partie d'enroulement (2) comprend une roue d'enroulement (210) et une partie de serrage (220) ; la roue d'enroulement (210) et la partie de serrage (220) sont reliées de manière fixe et détachable ; la partie de serrage (220) est pourvue sur elle des feuilles de ressort (5) ; la roue d'enroulement (210) est pourvue sur elle de la colonne d'enroulement (4) ; et la roue d'enroulement (210) est pourvue sur elle d'un trou traversant (9) configuré pour permettre à la sangle (24) de passer à travers, **caractérisé en ce que** la partie de serrage (220) est une feuille de ressort de type Ω (221), deux colonnes de positionnement (10) sont prévues de manière correspondante sur deux côtés d'une ouverture de la feuille de ressort de type Ω (221), et les feuilles de ressort (5) sont prévues sur des parties d'extension de deux extrémités de l'ouverture de la feuille de ressort de type Ω (221) ; un bossage de positionnement (11) est prévu sur la roue d'enroulement (210), et deux rainures de positionnement (12) sont prévues de manière correspondante sur deux côtés du bossage de positionnement (11) ; et les deux colonnes de positionnement (10) sont encastrées dans les deux rainures de positionnement (12) respectivement.

2. Appareil de réglage de sangle (42) selon la revendication 1, dans lequel deux blocs de fixation (13) et deux bosses en forme d'arc (14) sont prévus sur la partie d'entraînement (1) ;
les deux blocs de fixation (13) viennent respectivement en butée contre les extrémités inférieures des feuilles de ressort (5), et les deux bosses en forme d'arc (14) viennent respectivement en butée contre une paroi interne annulaire de la feuille de ressort de type Ω (221) ; et
un espace est prévu entre les deux bosses en forme d'arc (14), la roue d'enroulement (210) est pourvue sur celle-ci d'une bosse d'entraînement (15), et la bosse d'entraînement (15) est encastrée dans l'espace.

3. Appareil de réglage de sangle (42) selon la revendication 1 ou 2, comprenant en outre une partie de fixation (22), dans lequel la partie de réglage (3) est prévue sur la partie de fixation (22), et la partie de fixation (22) est configurée pour être connectée de manière fixe avec un objet à l'extérieur.

4. Appareil de réglage de sangle (42) selon la revendication 3, dans lequel la partie de fixation (22) comprend un connecteur (2210) et une base de support (2220) ; et
la partie de réglage (3), le connecteur (2210) et la base de support (2220) sont prévus en séquence ; la base de support (2220) et le connecteur (2210) sont tous deux reliés de manière fixe à la partie de réglage (3) de manière détachable.

5. Ensemble de réglage de ceinture, **caractérisé en ce qu'**il comprend une sangle (24), de multiples boucles de guidage (23), et le dispositif de réglage de sangle (42) selon l'une quelconque des revendications 1 à 4, dans lequel
les boucles de guidage multiples (23) sont configurées pour être fixées sur un objet à l'extérieur, et les boucles de guidage multiples (23) sont prévues à intervalles ; et la sangle (24) passe à travers les boucles de guidage multiples (23) en séquence et est fixée sur la partie de fixation.
